# EUROPEAN PATENT SPECIFICATION

(11) **EP 2 918 084 B1**
(45) Date of publication and mention of the grant of the patent: **23.12.2020**
(21) Application number: 13786294.2
(22) Date of filing: 14.10.2013
(51) Int. Cl.: H04R 1/40

(54) **A MICROPHONE DEVICE, METHOD TO OPERATE AND A SYSTEM THEREOF**
MIKROFONVORRICHTUNG, VERFAHREN ZUM BETRIEB UND SYSTEM DAMIT
DISPOSITIF DE MICROPHONE, PROCÉDÉ D'UTILISATION ET SYSTÈME ASSOCIÉ

(30) Priority: 15.10.2012 FI 20126070
(43) Date of publication of application: 16.09.2015
(73) Proprietor: Trick Technologies OY, 02150 Espoo (FI)
(72) Inventor: KAUPPILA, Timo, FI-02120 Espoo (FI); KORPELA, Lasse, FI-02120 Espoo (FI); STUDERS, Mikelis, LV-1024 Riga (LV); TAANILA, Pyry, FI-02110 Espoo (FI)
(74) Representative: Boco IP Oy Ab
(86) International application number: PCT/FI2013/050985
(87) International publication number: WO 2014/060647

(56) References cited:
- JP-A- H09 219 897
- US-A- 5 675 660
- US-A1- 2006 233 406
- US-A1- 2009 305 785
- US-A1- 2010 248 832
- US-A1- 2011 068 944

## Description

The invention belongs in a very general level to the field of wireless communication of audible signals, but more specifically to the field of using a microphone in a microphone device, as an independent claim thereof specifies in the preamble part of the independent claim directed to the microphone device.

### Background

Communication in a conference has its challenges in a large room or presentation space to the organizing parties. Not only in the form of audio-visual techniques as such for one sided lecturing, but as in many cases the audience is welcomed to participate in the discussion, i.e. to communicate two ways between the audience and the presenter.

One problem relates to the microphones, which have been turned to wireless as such in order to make the counter questioning easier for the audience members. However, in a crowded space, the audience members that are intending to ask something or willing to comment on the speech, are ajar situated in the scene. Thus, microphone that is necessary or at least convenient in the vast rooms, to get the voice of audience members to get heard over the noise originating from the people present in the room has to be passed from person to person from the respective hand from a person to the next person sitting just next to the first person. This is slow, especially when there are many members in the audience situated far away from each other in a random manner. Precious time is wasted, as well as in the cases, where a microphone runner is hired to serve the microphone from an audience member to another.

In many cases, also the nature of such events becomes very formal, and a bar for asking a question or presenting a comment is unnecessarily raised. Also hitting the microphone and/or dropping a microphone may not only cause funny noises and may be annoying for the audience as well as to the speaker in question, but also severely damage audio system devices in the worst case.

US patent application 2010/0248832 discloses a method of controlling a microphone-based video game, where change of state of the microphone is detected on basis of motion signals, and number of players is changed in the video game accordingly.

US patent application US 2009/0305785 discloses a microphone controller, which incorporates sensors configured to detect gestures so that the user can use the gestures to navigate and perform actions in a graphic user interface.

US patent 5,675,660 discloses a tubular cover for protecting a microphone that comprises a tubular shield that is sound permeable and surrounds the microphone to guard it from

Japanese patent publication JP H09 2019897 discloses a bidirectional microphone fixed in a cylindrical pipe that is covered with elastic material such as sponge to reduce touch noise transmitted to the pipe.

Embodiments of the invention solve, or at least mitigate these problems. This is made by the microphone device according to an embodiment of the invention.

A microphone device according to the invention is characterized in that what has been said in an independent claim thereof in the characterizing part.

A method of operating a microphone device according to the invention is characterized in that what has been said in an independent claim thereof in the characterizing part.

A microphone system according to the invention is characterized in that what has been said in an independent claim thereof in the characterizing part.

Other embodiments are indicated in dependent claims, examples and figures provided with exemplifying examples on embodiments.

Embodiments are combinable in suitable part.

A microphone device according to an embodiment is defined in the claim 1.

In this ensemble of embodiments the microprocessor defines, according to at least one sensor, the state of the motion of the microphone device. Although a skilled person in the art knows many ways to make a control signal use to control a device as such, for example a threshold range dependency for a control signal as such, it is not the aim of the embodiments to claim the mere threshold range dependency for operation of the device via a control signal formation according to the known techniques as such alone.

In this embodiment the microphone device can be a throwable unit comprising a microphone or a microphone unit. Microphone unit may comprise in an embodiment a microphone, but also further electronics as such for controlling the operation of the mere microphone component, to switch on/off and/or filtering.

According to an embodiment the microphone unit is configurable so that said first state of communication is the state of silence. In the state of silence the microphone unit is muted for the external devices in the microphone system. The muting can be made by muting at least one of the microphone unit and communicator unit.

In this ensemble of embodiments the microprocessor defines, according to at least one sensor, the state of the motion of the microphone device. Although a skilled person in the art knows many ways to make a control signal use to control a device as such, for example a threshold range dependency for a control signal as such, it is not the aim of the embodiments to claim the mere threshold range dependency for operation of the device via a control signal formation according to the known techniques as such alone.

In this embodiment the microphone device can be a throwable unit comprising a microphone or a microphone unit. Microphone unit may comprise in an embodiment a microphone, but also further electronics as such for controlling the operation of the mere microphone component, to switch on/off and/or filtering.

According to an embodiment the microphone unit is configurable so that said first state of communication is the state of silence. In the state of silence the microphone unit is muted for the external devices in the microphone system. The muting can be made by muting at least one of the microphone unit and communicator unit.

According to an embodiment the microphone device is configurable so that said second state of communication is state of active, state of voice. In the state of active the microphone device is active for the external devices in the microphone system. The activating can be made by making at least one of the microphone unit and communicator unit active.

In the embodiments expressions first and second are only used as temporal names to differentiate their main expressions from each other, so aiming only to simplify the language, without any intention to restrict the order, quality or quantity in the expression comprising first and/or second as an attribute.

In an embodiment the first state or the second state can be such a state in which there is an attenuated signal present to be further delivered to a system device or its part.

According to an embodiment of the invention the microphone device can comprise such a communicator unit that comprises a transmitter- receiver unit for a duplex communication with an external unit.

Duplex in this context is used to refer to two-way communication. In this embodiment variant, the microphone device, or its part or parts via the controller unit can be controlled by the signals sent from an external microphone system device. Such a system device can comprise a blue tooth, WLAN, or other radio-communication means to send signals to the microphone device, which in such an embodiment comprises the corresponding means to receive the signals to be utilized as data and/or parameters in the operation of the microphone device. This way muting can be controlled, i.e. which parts to be kept in a muted state and which are kept active. This way also the communicator can be kept in an active state, but ignored to receive the signal that would be available.

According to an embodiment variant a separate microprocessor unit without the sensors for detecting motion could be in the external unit that receives the signal and that external unit makes the decision what should be done with the signal, i.e. muted, faded, etc., so the work is done in the receiver side and not the throwable microphone side.

According to an embodiment the microphone device according to an embodiment comprises such a controller unit that comprises a coder programmed to code the signal from a microphone device as a microphone signal into digital form electric signal. The coder can be in suitable part built from software pieces to code the signals into electrical form. This way the signal can be made secret, hidden or pseudo randomized so that even if there were several microphone devices in use in the same room, their signals could be separable via the coding without unintentional overlapping.

In an embodiment variant a coder can be used to decode or translate the via-communicator-unit received commands to be executed in the microphone device's processor. Parameters and other information can be decoded so to the use of the microphone device. Also signal processing commands and/or data can be thus communicated to the microphone device from an external source. According to an embodiment the coder can be updated to correspond to a certain radio communication protocol, which can be a known one as such. According to an embodiment of the invention the microphone device comprises such a sensor unit which comprises at least one of the following components: accelerometer, gyroscope, magnetometer, position sensor, acoustic sensor for Doppler measurements, barometric pressure sensor, other pressure sensor, a combination of said components comprising at least one kind of said components equally or more than two. Thus, should it be mentioned that there are in fact in one example of such embodiment two separate transducers in the system, one for sensing and one microphone.

This way, redundant measurements can be made in parallel and/or in series, to better stabilize the operation when the device is being thrown and/or when landing. Also information from acoustics of the room or space can be received so. According to an embodiment of the invention the microphone device comprises an acoustic transmitter for making sound outside the audible human range, for making measurements of the acoustics.

A method for operating a microphone device comprises:
- monitoring the state of the motion of the microphone device,
- changing the state of the motion of the microphone device,
- as a response to the changed state of the motion, generating to a corresponding state of the motion a state of a control signal by the sensor unit,
- setting at least one of the microphone unit or the communicator unit from a first state of communication corresponding a first state of the control signal to a second state of communication corresponding a second state of control signal,
- reversing at least one of the microphone unit or the communicator unit from a first state of communication corresponding a first state of the control signal to a second state of communication corresponding a second state of control signal as a response to a further change in the state of the motion of the microphone device,
- forming from the microphone signal a digital electric signal to be sent to an external station.

According to an embodiment of the invention in the method of operating the microphone device it is set into a third state, a measurement state, in which the microphone device is programmed to make measurements from a signal from at least one microphone of the microphone device.

According to an embodiment of the invention a microphone system comprises an external communication unit to at least one embodied microphone device, said external communication unit being arranged to communicate with said at least one microphone device. The communication can be done wirelessly. The communication can follow an electronic digital protocol that is known as such, in order to communicate radio signals between system elements of the microphone system. System element can be in an embodiment a microphone device as embodied, but also as a system element, an external microphone system unit as system element that is used in communication with the microphone device can be counted as system element in this context. External system element can comprise a mere receiver capable of receiving the signals from a microphone system element, but in another embodiment can also comprise a transmitter to transmit wirelessly radio signals to the microphone device as the system element, following a pre-determined communication protocol. The receiver in the microphone system element can also be a receiver as such, or being comprised in an transceiver as such as a module separately operable with the microphone system.

According to an embodiment of the invention the transmitter in the microphone device can be embodied by a body pack transmitter.

Embodiments of the invention are combinable in suitable part. Term comprise is used as an open term.

In the following a reference is made to the figures being attached to the description of the embodiments of the invention. In the following figures examples are indicated about embodiments of the invention, but in a manner that is not intended to restrict the scope of the claims only to the shown embodiments in the figures.
- Fig 1: illustrates embodiments of the invention,
- Fig 2: illustrates a method according to an embodiment and
- Fig 3: illustrates a schematic view to a software used in the control signal forming.

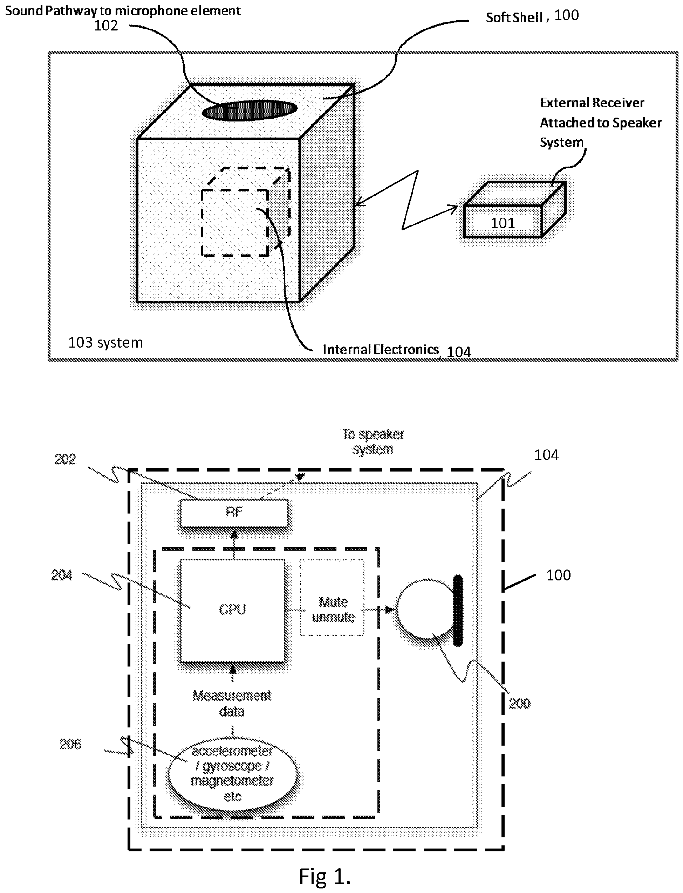

Fig 1 illustrates embodiments of the invention. The sound path way to the microphone device is indicated by 102, an exemplified shadowed ellipse on top of the cubically embodied soft cell 100 of the microphone device. According to an embodiment the soft cell can be a module, in which the electronics are placed as another module, or alternatively the cell can be a closed module as such with integrated electronics, or in a variant, electronics can be diversified in to the module structure inside the soft cell. According to an embodiment other soft forms can be used also alternatively. Soft in this context means that it has a textural structure and lined so that when the microphone device hits a human operator it does not cause a significant injury. The microphone device is drawn inside the lining 103 indicative of the microphone system, into which the microphone device can belong as an operative system element. An external receiver is indicated by the reference number 101, and the wireless communication illustrated by the lightning shaped line, between these two system elements. The system element 101 can comprise connection further to other system parts, or to a remote system for the speakers or other audiovisual means, but also to a data base in an embodiment. In an embodiment the system element 101 can comprise also a transmitter, so it can communicate data, commands, voice related settings, speaker ID from the database, and/or parameters or updates to another microphone device. According to an embodiment variant, the muting, replacement sound adding, unmuting, sound fading, or other in microphone device performed actions can be performed in the control of the system element 101. According to an embodiment variant this can be made in the system element 101. So the sound processing can be made in the receiver site in these embodiment variants.

Fig 1 illustrates also electronics in the casing 100, especially in the case 104, deep in the soft shell 100, which facilitates that the microphone device can be thrown without damage to the device or the person catching the microphone device, formatted system element. The electronics comprise an RF transceiver, comprising at least a transmitter, so as arranged to communicate with a system element 101. The communication can be digital formatted to follow a radio protocol as such. However, in an alternative embodiment the communication may follow analog format for an analog receiver in the system element 101, which can be a microphone system element 101 connected to the external system.

The microprocessor CPU 204 is indicated to be included into a controller unit, which is demonstrated by the dashed outer box. The controller unit is arranged to control the operations and/or parameters as well as measurement data made by the microphone device. The controller unit is drawn to comprise also a movement sensor 206 to sense the motions state of the microphone device. The implementation of the sensor can be made by using accelerometers, gyroscopes, magnetometers, barometric pressure sensor, pressure sensor or other means to sense the state of the motion. In an embodiment this can be based on acoustic signal available or sent from the microphone device, with help of Doppler effect. Between the CPU and microphone unit 200 there is a box mute/unmute indicated, which is arranged to be operable by the control signal according to which the microphone units state is changed from one state to another state, corresponding the a first state of motion and a second state of motion of the microphone device. According to an optional embodiment, although only showing the muting of microphone, a skilled person in the art knows well from the embodiments that also the communication unit can be muted during the throw or a catch, optionally or in addition to the microphone unit.

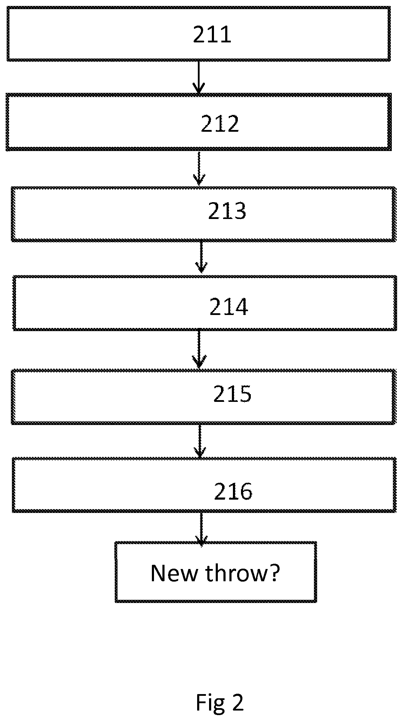

Fig 2 illustrates an embodiment of the invention directed to the method of operating a microphone device.

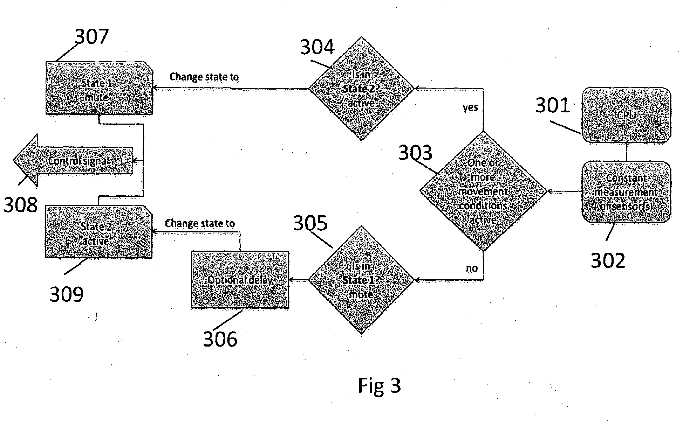

The embodied method for operating a microphone device according to an embodiment of the invention comprises:
- monitoring 211 the state of the motion of the microphone device for recognizing the state of the motion,
- recognizing 212 the changed state of the motion of the microphone device,
- as a response to the recognized changed state of the motion, generating 213 to a corresponding state of the motion a state of a control signal by the sensor unit 206, Fig 3 Illustrates control signal formation related software operation, in a simple embodiment of the invention.
- setting 214 at least one of the microphone unit 200 or the communicator unit 202 from a first state of communication corresponding a first state of the control signal to a second state of communication corresponding a second state of control signal,
- restoring 215 at least one of the microphone unit 200 or the communicator unit 202 from a first state of communication corresponding a first state of the control signal to a second state of communication corresponding a second state of control signal as a response to a further change in the state of the motion of the microphone device,
- forming 216 from the microphone signal a digital electric signal to be sent to an external station.

In an embodiment, a response may lack due to a change in motion, depending on whether the motion is seen as a throw or catch state, as it could be that a person is simply moving it in their hands. Thus, the sensors of the microphone device are arranged to give signals to the microprocessor to indicate the movement by throwing so as to set the microphone device into mute state either by muting the microphone unit or the transmitter or transceiver unit or a part thereof.

Fig 3 illustrates control signal formation related software operation in a simple embodiment of the invention. The software algorithm in the control unit can be used according to the example in Fig 3. The software monitors (in the method phase 212) constantly the state of the motion of the microphone device. In Fig 3 only such states (state 1 and state 2) as "mute" and "on" ("active") are indicated as examples, without any intention to limit the dynamics of the sensors of the sensor unit in embodiments. When the sensor triggers motion or acceleration to correspond free-fall, rotation or hard acceleration or deceleration, in an event of throwing or catching, the controller unit generates a control signal that switch off the microphone unit and/or the transmitter. According to an optional embodiment the state of the microphone unit is communicated to the external microphone system element, that listens to the transmission of the microphone device, but the microphone system element external to the microphone device couples to a state in which the transmission is not passed to the sound system.

Fig 3 indicates an example on the monitoring of the state of motion via the sensors of the microphone device and the control signal formation accordingly. According to the example, the control signal (308) is used to mute 307 and/or un-mute 309 the microphone and/or the transmitter according to the state of motion of the microphone device, via the control signal state corresponding to the state of the motion. In the example of Fig 3, the states state 1 and state 2 are not bound to a particular state, not in other examples either, as a skilled person knows from the examples of the embodiments.

CPU 301 is used in the controlling in the example to form also the control signal 308 with the appropriate signal level corresponding the state of the motion. The microphone device's control unit monitors constantly 302 the sensors, and when at least one sensor indicates movement, the state of the motion is detected and it is checked 303 that is the motion such that the control signal state is in the state "active" 304 indicating the capability to receive and/or pass sound via the external unit of the microphone system to the sound system. In case of movement detected, the control signal state is set to correspond the state "mute" 307 indicating the incapability not to receive and/or pass sound via the external unit of the microphone system to the sound system. In case of no movement detected, although state mute 305 was present, the control signal state is set to correspond the state "active" 309 indicating the capability to receive and/or pass sound via the external unit of the microphone system to the sound system. According to an embodiment the microphone device is delayed 306 to switch on to the active sate, so the handling noises after a catch can be thus eliminated with a suitable timing interval, in an embodiment less than second.

Dependently on the indication of the control unit, the state of the motion of the microphone device is changed to state 1 307 "mute" in the Fig 3 set from an active state (304), when a throw for example is detected.

Dependently on the indication of the control unit, the state of the motion of the microphone device is changed to state 2 309 "active" in the Fig 3 set from a mute state (305), when a catch for example is detected, and handling sound of the user in an embodiment is switched off by the delayed (306) state switch after the catch. According to the state of mute state 1 (307) or state active state 2 (309), a control signal 308 is generated so that the electronics of the microphone device can detect the state accordingly and switch the microphone and/or transmitter to the corresponding state in the control of the control signal. This way, for example states of rolling, free fall, state still, state high acceleration, state low acceleration can be detected, just to mention a few examples, not only limiting the states only to indicated examples.

A skilled person in the art knows well from the embodiments that every signal level change may be not a result from the microphone device's movement by a throw, as changing the motion and hence triggering the motion sensors does not imply a change of the state indicative for throwing the microphone device, thus it is beneficial, only when this change is seen to be great or refers to throwing or catching. For example, a person waving the microphone in his hands will not turn it off, or when the person changes the way of moving, the movement type as being standing or sitting or moving there between states of sitting, standing and walking. According to an embodiment the software of the microphone device is configured to recognize the movements according to the control signal.

According to an embodiment variant of the invention, the microphone device is remotely controlled by the microphone system element 101 so that at least the microphone is muted during a throw, but also the transmitter, in addition to or optionally. However, the microphone device in such embodiment Is configured to listen the commands from the remote system element 101 external to the microphone device.

According to an embodiment of the invention, the microphone device is arranged to discriminate motion type, one first state of motion from a second state of motion or a third state of motion, etc. According to an embodiment of the invention a mentioned state of motion, (first, second, third, etc.) can be a state of motion of the microphone device when the user is handling the microphone device, walking, sitting, getting up, rotating, etc., catch and/or state of being rest, falling with a constant acceleration or speed or moving with a constant horizontal speed. For example, according to an embodiment of the invention the state of the rest is considered as a second state of motion, especially in such an embodiment, wherein it is sufficient to discriminate the throw-resulted movement from being rest or other types of movements, so actually being without a need to recognize intermediate states of motion, just throw when it happens and the catch when such happens to be the first and second state of motions of the microphone device. However, according to an embodiment of the invention the sensor unit dynamics and quantization can limit the number of states a single sensor can indicate for the microphone device. By using several sensors, especially of different types, the number of states can be increased to indicate for example intermediate states when needed, but also to clarify just a few states of motion, including throwing, catching, falling, or the user movement originating from other motions, so discriminating between high and low valued accelerations, relating respectively to the catch or starting a walk. According to an embodiment the software has a feature to set the motion discrimination parameters accordingly, in which states of motion the muting/unmuting should be performed.

According to a variant of embodiment of the invention the software has a feature, according to which a replacement sound is played during a throw and/or catch indicative of the state of the motion. According to an embodiment the sound signal can be adjusted according to the motion state to the audience. The sound level can be lowered for example, i.e. attenuated to a certain pre-determined level during the throw or part of it. This can be made also to the replacement sound if used in the embodiment. According to an embodiment of the invention, the program within the CPU is configured to work by understanding the state of the microphone device and determining whether it is being thrown or caught, distinguishing movement from simple hand gestures and variations to the device caused by normal use when a speaker is talking into the microphone.

To determine the unique state, an embodiment of the invention uses in an ensemble of sensors comprising at least one sensor or a combination of sensors that determine among other things rotation, free fall, and/or sudden acceleration or deceleration. Sudden acceleration or deceleration is understood by the CPU as an impact of the device to the ground or when it is caught or can mean the object is being thrown. In such cases, the response is to mute/ lower the signal of the microphone unit. Alternatively in an embodiment variant, free fall is also detected as a movement type by using sensors, which in turn signals that the microphone is not being held in hand and hence is in an airborne state, in the air, or being thrown, again creating a response to the CPU and hence the microphone unit. In an embodiment rotation is also measured, with pivoting angular velocity, and/or multiple rotations of the microphone in a given time frame indicative of the microphone not being in use by the user and hence should be turned off in the very embodiment. It is important to monitor a number of states simply because some sensors will not offer accurate values in all orientations of the device. For example, when the device is thrown and is simultaneously rotating, the ability of the sensor to detect free fall is compromised, however, rotation can still be measured. When a mute response is triggered, a timer is set that will turn the microphone back "on" after a given timeframe, when the motion has essentially stopped (because of catch for example), usually measured in milliseconds in an embodiment, but keeps the microphone device mute during the time frame, although the state of the motion corresponds the voice active state according to the program running in the memory of the processor.

When the mute state is activated, the microphone device is in mute state, but remains in mute state until the time frame is passed, although the device was ready to receive sound. When one of the mute triggers from the sensors of the sensor unit is active, the device is put into the mute state. When the triggers become inactive, the device is put to an active state after a small delay of less than 1000ms.

According to an embodiment the microphone device can be kept in a default state of motion, and when a change in the change of the motion detected, the state of the motion is changed from the default stage.

### Examples on Use

According to an embodiment of the invention, the microphone device in question is a throwable microphone device, (microphone unit or microphone in the flowing, too, according to the context) comprising to be used as engaged to audiences and to facilitate question and answer sessions. Contrary to normal microphones which cannot be dropped or thrown without incurring a loud noise due to forces hitting the microphone element and its casing, embodiments of the invention avoid this kind of effects by turning the microphone of the microphone unit on mute when it senses that it is being thrown and caught, thus avoiding loud noises which would cause inconvenience to the audience members as well as potentially damage the sound system which the microphone unit is connected to, according to an embodiment via the microphone system.

Such embodiments comprise several advantages, to mention a few in a non-restrictive manner. Firstly, it makes asking questions and engaging with audiences quicker since passing the microphone becomes much more efficient, especially in crowded gatherings. Embodiments of the invention also engage the audience members by making the process more interactive, with the speaker and audience members gaining a connection through the process of throwing and catching. Lastly, the embodiments of the invention have the potential to save up costs incurred from having to have as many multiple traditional microphones to accommodate large audiences as well as potentially a corresponding amount of microphone "runners", or people assigned to hold the microphones until someone poses a question. The Embodiments of the invention can also be used in smaller groups and different settings, for example in team brainstorming sessions, where the microphone is passed between team members who each express their opinion on a matter. or within educational settings such as a classroom or a lecture hall.

According to an embodiment, the microphone device can perform in the microprocessor sound checks, spectral measurements of the sound in suitable part, and communicate the results to the external unit in the same system.

According to an embodiment of the invention the active state is about to be switched on after a delay when the motion is deduced to be stopped so that the speaking can start. According to an embodiment the delay is less than 800 ms, preferably less than 500 ms. So the handling of the microphone device can be made quietly at the beginning.

### Examples on further embodiments

Embodiments of the invention are in a microphone setup configured to be automatically put on mute when the microphone is tossed to the audience. In a very simple form of embodiments, there is at least one sensor (eg accelerometer) to be used in the formation of the control signal to mute/unmute the microphone device's microphone and/or the radio transmitter, according to the state of the motion of the microphone device. However, improvement is achieved when a redundant sensor is used, so that false detections can be minimized. Suitable sensors are for example accelerometers and gyroscopes, from which latter types can be used detecting rotation movements, that are typical to a toss of the microphone device.

The device has inbuilt sensors implemented by at least one ensemble of sensor units comprising at least one sensor, such as an accelerometer, gyroscope or magnetometer and the like that sense zero gravity state, orientation, acceleration and throw speed when the microphone is in motion. Doppler phenomena can be used in the measurements, especially in the measurement state, in which the microphone device can make observations from the space in which it is used, the sound and echo as well as other data to be used to fine tune the operation of the microphone unit.

Thus, the microphone can be automatically put on mute using a controller unit that comprising processing unit CPU. As the sensors, sense the stability of the microphone, they send the information to CPU, which forms the control signal and toggles microphone state to non-mute (active) state. As the microphone is active, it can send audio via radio interface (RF) to external speaker system or a receiver.

According to an embodiment the mute state corresponds to the first state of motion, the first state of communication, and the active state corresponds to the second state of motion, the second state of communication. A skilled man in the art knows from the expressions mute state and active state, that in corresponding embodiments in which the microphone unit and/or communicator units are in mute state or in active state, they can pass the respective signal from the unit forward according to the indication of the control signal state corresponding the first state and second state.

According to an embodiment the control signal can be an analog signal, according to which embodiment passing a state corresponding pre-set threshold is detected in the controller unit. According to an embodiment the control signal can be a digital signal, according to which embodiment a matching pulse train corresponding pre-set state of control signal is detected in the controller unit, and latched for the operation of the further components of the microphone device. In a respective embodiment, the threshold ranges or the threshold criteria indicative of the state of the motion can be formed according to the control signal type.

According to an embodiment of the invention, the communication unit can comprise an analog radio transmitter, but alternatively the transmitter can be digital. The type of the transmitter can be selected, according to the external system's receiver to be used for the sound system. According to an embodiment, the transmitter can be only one type for certain type of sound systems, but according to an embodiment of the invention the communicator unit can comprise both facilities to be chosen according to the external sound system's receiver. According to an embodiment the external system can send to the embodied microphone system information which type, analog or digital transmission should be used with the sound system. Such automatic recognition may also comprise other parameter exchange between the external system's devices and a microphone device using the system.

According to an embodiment of the invention the communicator's transmitter part can be a replaceable module. According to an embodiment of the invention the module is a quick switchable analogue or a digital transmitter. According to an embodiment the module can in a variant comprise also a receiver to receive RF-signals. According to an embodiment the communicator unit 202 can be embodied by a body-pack transmitter or transceiver as such that is commonly available in the markets.

When the microphone of the microphone device is not in use as microphone, for example during throw or toss, according to an embodiment, the microphone is muted but according to another embodiment the transmitter is muted. According to a further optional variant of the embodiments, both are muted. In such an embodiment variant, the receiver present in such an embodiment of the microphone device should be left functional to listen to the commands to be passed to the CPU to control the parts that are to be muted and/or activated according to the state of the motion, by the commands from the microphone system element.

### Even Further examples:

- In an embodiment of the invention the muting can occur within the actual device or within the receiver whereby the device also sends a separate signal to the receiver which identifies its current state and hence whether it should be muted
- In an embodiment of the invention, the device can also choose to fade the sound coming from the microphone instead of muting it, so that the second state or first state in question is that state
- In some embodiment variants, the device can also choose the microphone system embodied to replace the sound from the microphone, muting the microphone and then adding a sound over it (example: when the microphone is thrown it makes a high pitched noise) so that the second state or first state in question is that state.
- In an embodiment variant, the microphone device can be integrated within a soft shell to avoid impact damage to the electronics as well as injury to potential users
- In an embodiment variant Lights and other indicators can be attached to the device to indicate its state. As for an Example: the microphone device or part of it glows green when it is being thrown.
- According to an embodiment, the microphone device can be a stand-alone system that attaches to body pack transmitters instead of using inbuilt transmitter system or radio interface.
- According to an embodiment of the invention the microphone device comprises a nano-transmitter tuned to a broad cast channel in the range of 88 MHz to 108MHz, so facilitating use in robust conditions. The nano transmitter can be a known as such transmitter, to be operable in very short distances where the local laws allow use of common broadcast channels in that way.
- According to an embodiment of the invention the catch is recognized by the sensor unit, and the microphone and/or the transmitter of the microphone device are/is muted accordingly.
- According to an embodiment of the invention, the soft cell can be implemented, in suitable part if not entirely, by a gaseous inflatable structure, like balloon inside of which there is the electronics module mounted. In such an embodiment the catch for example can be detected by using a pressure sensor in the structure so to mute/unmute the microphone and/or the transmitter according to the control signal formed by the control unit with the help of the pressure sensor. A surprising effect can be gained by using a barometric pressure sensor that is capable of detecting pressure differences typical to altitude changes, so as to measure the altitude of the microphone device also during the throw.

## Claims

1. Throwable microphone device comprising at least
- a casing (100) comprising a soft shell intended for protecting the microphone device from being damaged when thrown,
- a microphone unit (200),
- a communicator unit (202),
- a controller unit functionally comprising a memory, a microprocessor (204), and a sensor unit (206) comprising at least a gyroscope and an accelerometer,
wherein the controller unit is configured to provide a control signal responsive to a motion of the microphone device detected with said sensor unit (206), so that in response to the control signal of said controller unit, either at least one of the microphone unit (200) or the communicator unit (202) is/are set to a state of silence, voice non-active corresponding a first state of the control signal or to a state of un-mute (309), voice active corresponding a second state of the control signal,
**characterized in that**
the control signal is configured to have at least two states of the control signal representing at least two states of motion of the throwable microphone device, wherein the two states of the control signal comprise:
- a first state of the control signal corresponding to a first state of motion in which the microphone device deemed to be airborne, or being thrown or caught, on basis of detecting one of acceleration corresponding free-fall, rotation, hard acceleration and hard deceleration occurring in an event of throwing or catching, and wherein in response to the first state of the control signal, the microphone device is configured to be set to the state of silence, voice non-active, and
- a second state of the control signal corresponding to a second state of motion in which the microphone device is deemed to be in rest or in use as microphone, on basis of detecting movement caused by simple hand gestures and variations to the device movement caused by normal use when the microphone device is being used for talking and wherein in response to the second state of the control signal the microphone device is configured to be set to the state of un-mute (309), voice active.

2. Microphone device of claim 1 wherein the communicator unit (202) comprises a transmitter-receiver unit for a duplex communication with an external unit.

3. Microphone device according to any one of the previous claims, wherein the controller unit comprises a coder programmed to code the signal from a microphone unit as a microphone signal into a form of electric signal.

4. Microphone device according to any one of the previous claims, wherein the sensor unit (206) comprises the gyroscope and the accelerometer and at least one of the following components: magnetometer, position sensor, acoustic sensor for Doppler measurements, a barometric pressure sensor, other pressure sensor, such a combination of said components that is comprising at least one kind of said components equally or more than two.

5. The microphone device according to any one of claims 1 to 4, wherein the communicator unit (202) comprises a transmitter, receiver and/or transceiver unit, which is mountable to the microphone device as an additional module.

6. Method for operating a microphone device according to any one of the claims 1 to 5, wherein the method comprises:
- monitoring (211), (302) constantly, based on information provided by a sensor unit (206) comprising at least an accelerometer and a gyroscope, a state of the motion of the microphone device for recognizing the state of the motion,
- recognizing that the microphone device is in a first state of motion, in which the microphone device is deemed to be airborne, or being thrown or caught, on basis of detecting one of acceleration corresponding free-fall, rotation, hard acceleration and hard deceleration occurring in an event of throwing or catching,
- in response to recognizing the first state of motion, generating a control signal (308) having a first state of control signal corresponding to the first state of motion,
- in response to the first state of control signal, setting least one of the microphone unit (200) or the communicator unit (202) of the microphone device to a first state of communication, which is a state of silence, voice non-active,
- recognizing (212) (303) a changed state of motion of the microphone device, wherein the changed state of the motion is a second state of motion, in which the microphone device is deemed to be in rest or in use by a user, on basis of detecting movement caused by simple hand gestures and variations to the device movement caused by normal use when a speaker is talking into the microphone,
- in response to recognizing the second state of motion, generating (213) a control signal (308) having a second state of the control signal corresponding to the second state of motion,
- in response to the second state of the control signal, setting (214) at least one of the microphone unit (200) or the communicator unit (202) from the first state of communication corresponding the first state of the control signal to a second state of communication corresponding the second state of control signal, wherein the second state of communication is a state of un-mute (309), voice active,
- forming from the microphone signal an electric signal to be sent to an external system element of the microphone system
- restoring (215) at least one of the microphone unit (200) or the communicator unit (202) from the second state of communication corresponding the second state of the control signal to the first state of communication, corresponding the first state of control signal as a response to a further change in the recognized state of the motion of the microphone device from the second state of motion to the first state of motion.

7. The method of claim 6 wherein the microphone device is set into a third state, a measurement state, in which the microphone device is programmed to make measurements from a signal from at least one microphone of the microphone device.

8. A microphone system (103) comprising an external communication unit (101) to at least one microphone device according to any one of the claims from 1 to 4, said external communication unit being arranged to communicate with said at least one microphone device.

## Patentansprüche

1. Wurffähige Mikrofonvorrichtung, mindestens umfassend:
- ein Gehäuse (100), das eine weiche Hülle umfasst, die dafür bestimmt ist, die Mikrofonvorrichtung beim Werfen vor Beschädigung zu schützen,
- eine Mikrofoneinheit (200),
- eine Kommunikatoreinheit (202),
- eine Steuerungseinheit, die funktionstechnisch einen Speicher, einen Mikroprozessor (204) und eine Sensoreinheit (206), die mindestens ein Gyroskop und einen Beschleunigungsmesser umfasst, aufweist,
wobei die Steuerungseinheit dazu eingerichtet ist, ein Steuersignal bereitzustellen, das auf eine mit der Sensoreinheit (206) detektierten Bewegung der Mikrofonvorrichtung anspricht, so dass in Antwort auf das Steuersignal der Steuerungseinheit die Mikrofoneinheit (200) und/oder die Kommunikatoreinheit (202) entweder auf einen Zustand der Stille, Sprache nicht aktiv, der einem ersten Zustand des Steuersignals entspricht, oder auf einen Zustand der Aufhebung der Stummschaltung (309), Sprache aktiv, der einem zweiten Zustand des Steuersignals entspricht, eingestellt wird/werden,
**dadurch gekennzeichnet, dass**
das Steuersignal so ausgelegt ist, dass es mindestens zwei Zustände des Steuersignals aufweist, die mindestens zwei Bewegungszustände der wurffähigen Mikrofonvorrichtung darstellen, wobei die beiden Zustände des Steuersignals umfassen:
- einen ersten Zustand des Steuersignals, der einem ersten Bewegungszustand entspricht, in dem, ausgehend von der Detektion einer in einem Ereignis des Werfens oder Fangens auftretenden Beschleunigung, die einem freien Fall, einer Drehung, einer starken Beschleunigung oder starken Verzögerung entspricht, davon ausgegangen wird, dass die Mikrofonvorrichtung im Fluge ist oder geworfen oder gefangen wird, und wobei die Mikrofonvorrichtung so eingerichtet ist, dass sie in Antwort auf den ersten Zustand des Steuersignals auf den Zustand der Stille, Sprache nicht aktiv, eingestellt wird, und
- einen zweiten Zustand des Steuersignals, der einem zweiten Bewegungszustand entspricht, in dem, ausgehend von der Detektion einer Bewegung, die durch einfache Handgesten verursacht wird, und von Bewegungsänderungen der Vorrichtung, die durch den normalen Einsatz verursacht werden, wenn die Mikrofonvorrichtung zum Sprechen verwendet wird, davon ausgegangen wird, dass die Mikrofonvorrichtung in Ruhe oder als Mikrofon in Verwendung ist, und wobei die Mikrofonvorrichtung so eingerichtet ist, dass sie in Antwort auf den zweiten Zustand des Steuersignals auf den Zustand der Aufhebung der Stummschaltung (309), Sprache aktiv, eingestellt wird.

2. Mikrofonvorrichtung nach Anspruch 1, wobei die Kommunikatoreinheit (202) eine Sender-Empfänger-Einheit für eine Duplexkommunikation mit einer externen Einheit umfasst.

3. Mikrofonvorrichtung nach einem der vorhergehenden Ansprüche, wobei die Steuerungseinheit einen Kodierer umfasst, der programmiert ist, das Signal von einer Mikrofoneinheit als Mikrofonsignal in eine Form von elektrischem Signal zu kodieren.

4. Mikrofonvorrichtung nach einem der vorhergehenden Ansprüche, wobei die Sensoreinheit (206) das Gyroskop und den Beschleunigungsmesser und mindestens einen der folgenden Bauteile umfasst: Magnetometer, Lagesensor, akustischen Sensor für Dopplermessungen, Luftdrucksensor, anderen Drucksensor, eine Kombination dieser Bauteile, die mindestens eine Art dieser Bauteile gleich oder größer als zwei umfasst.

5. Mikrofonvorrichtung nach einem der Ansprüche 1 bis 4, wobei die Kommunikatoreinheit (202) eine Sender-, Empfänger- und/oder eine Transceiver-Einheit umfasst, die als Zusatzmodul an der Mikrofonvorrichtung montierbar ist.

6. Verfahren zum Betreiben einer Mikrofonvorrichtung nach einem der Ansprüche 1 bis 5, wobei das Verfahren umfasst:
- konstantes Überwachen (211), (302) eines Zustands der Bewegung der Mikrofonvorrichtung anhand von Informationen, die von einer Sensoreinheit (206), die mindestens einen Beschleunigungsmesser und ein Gyroskop umfasst, bereitgestellt werden, zur Erkennung des Zustands der Bewegung,
- Erkennen, dass sich die Mikrofonvorrichtung in einem ersten Bewegungszustand befindet, in dem, ausgehend von der Detektion einer in einem Ereignis des Werfens oder Fangens auftretenden Beschleunigung, die einem freien Fall, einer Drehung, einer starken Beschleunigung oder starken Verzögerung entspricht, davon ausgegangen wird, dass die Mikrofonvorrichtung im Fluge ist oder geworfen oder gefangen wird,
- in Antwort auf die Erkennung des ersten Bewegungszustands, Erzeugen eines Steuersignals (308), das einen ersten Steuersignalzustand aufweist, der dem ersten Bewegungszustand entspricht,
- in Antwort auf den ersten Steuersignalzustand, Einstellen der Mikrofoneinheit (200) und/oder der Kommunikatoreinheit (202) der Mikrofonvorrichtung auf einen ersten Kommunikationszustand, der ein Zustand der Stille, Sprache nicht aktiv, ist,
- Erkennen (212) (303) eines geänderten Bewegungszustands der Mikrofonvorrichtung, wobei der geänderte Zustand der Bewegung ein zweiter Bewegungszustand ist, in dem, ausgehend von der Detektion einer Bewegung, die durch einfache Handgesten verursacht wird, und von Bewegungsänderungen der Vorrichtung, die durch den normalen Einsatz verursacht werden, wenn ein Sprecher in das Mikrofon spricht, davon ausgegangen wird, dass die Mikrofonvorrichtung in Ruhe oder bei einem Nutzer in Verwendung ist,
- in Antwort auf die Erkennung des zweiten Bewegungszustands, Erzeugen (213) eines Steuersignals (308), das einen zweiten Steuersignalzustand aufweist, der dem zweiten Bewegungszustand entspricht,
- in Antwort auf den zweiten Steuersignalzustand, Umstellen (214) der Mikrofoneinheit (200) und/oder der Kommunikatoreinheit (202) vom ersten Kommunikationszustand, der dem ersten Zustand des Steuersignals entspricht, auf einen zweiten Kommunikationszustand, der dem zweiten Zustand des Steuersignals entspricht, wobei der zweite Kommunikationszustand ein Zustand der Aufhebung der Stummschaltung (309), Sprache aktiv, ist,
- Ausbilden eines an ein externes Systemelement des Mikrofonsystems zu sendenden elektrischen Signals aus dem Mikrofonsignal,
- Zurückstellen (215) der Mikrofoneinheit (200) und/oder der Kommunikatoreinheit (202) vom zweiten Kommunikationszustand, der dem zweiten Zustand des Steuersignals entspricht, auf den ersten Kommunikationszustand, der dem ersten Zustand des Steuersignals entspricht, als Antwort auf eine weitere Änderung des erkannten Zustands der Bewegung der Mikrofonvorrichtung vom zweiten Bewegungszustand zum ersten Bewegungszustand.

7. Verfahren nach Anspruch 6, wobei die Mikrofonvorrichtung auf einen dritten Zustand, einen Messzustand, eingestellt wird, in dem die Mikrofonvorrichtung programmiert ist, Messungen ausgehend von einem Signal von mindestens einem Mikrofon der Mikrofonvorrichtung vorzunehmen.

8. Mikrofonsystem (103), das eine externe Kommunikationseinheit (101) für mindestens eine Mikrofonvorrichtung nach einem der Ansprüche 1 bis 4 umfasst, wobei die externe Kommunikationseinheit dazu eingerichtet ist, mit der mindestens einen Mikrofonvorrichtung zu kommunizieren.

## Revendications

1. Dispositif de microphone lançable comprenant au moins
- un boîtier (100) comprenant une enveloppe souple prévue pour protéger le dispositif de microphone contre des dégâts lorsque celui-ci est lancé,
- une unité de microphone (200),
- une unité de communicateur (202),
- une unité de contrôleur comprenant fonctionnellement une mémoire, un microprocesseur (204) et une unité de capteur (206) comprenant au moins un gyroscope et un accéléromètre,
ladite unité de contrôleur étant configurée pour fournir un signal de commande répondant à un mouvement du dispositif de microphone détecté par ladite unité de capteur (206) de telle façon que, en réponse au signal de commande de ladite unité de contrôleur, au moins l'une parmi l'unité de microphone (200) et l'unité de communicateur (202) est/sont réglée(s) ou à un état de silence, voix inactive, correspondant au premier état du signal de commande ou à un état non muet, voix active, correspondant à un deuxième état du signal de commande,
**caractérisé en ce que**
le signal de commande est configuré pour présenter au moins deux états du signal de commande représentant au moins deux états de mouvement du dispositif de microphone lançable, lesdits deux états du signal de commande comprenant :
- un premier état du signal de commande correspondant à un premier état de mouvement dans lequel le dispositif de microphone est réputé être en vol, ou être lancé ou attrapé, sur la base de la détection d'une accélération correspondant à une chute libre, une rotation, une accélération brutale ou décélération brutale se produisant an cas d'une action de lancer et rattraper, et ledit dispositif de microphone étant configuré pour être réglé à l'état de silence, voix inactive, en réponse au premier état du signal de commande, et
- un deuxième état du signal de commande correspondant à un deuxième état de mouvement dans lequel le dispositif de microphone est réputé être au repos ou être utilisé en tant que microphone, sur la base de la détection d'un mouvement causé par des gestes de main simples ou de variations de mouvement du dispositif causées par l'utilisation normale lorsque le dispositif de microphone est utilisé pour parler, et ledit dispositif de microphone étant configuré pour être réglé à l'état non muet (309), voix active, en réponse au deuxième état du signal de commande.

2. Dispositif de microphone selon la revendication 1, dans lequel l'unité de communicateur (202) comprend une unité d'émetteur-récepteur pour une communication en duplex avec une unité externe.

3. Dispositif de microphone selon l'une des revendications précédentes, dans lequel l'unité de contrôleur comprend un codeur programmé pour coder le signal venant d'une unité de microphone en tant que signal de microphone sous une forme de signal électrique.

4. Dispositif de microphone selon l'une des revendications précédentes, dans lequel l'unité de capteur (206) comprend le gyroscope et l'accéléromètre et au moins l'un des composants suivants : magnétomètre, capteur de position, capteur acoustique pour mesures Doppler, un capteur de pression barométrique, un autre capteur de pression, une combinaison desdits composants qui comprend au moins un type desdits composants au nombre de deux ou plus de deux.

5. Dispositif de microphone selon l'une des revendications 1 à 4, dans lequel l'unité de communicateur (202) comprend un émetteur, un récepteur ou une unité d'émetteur-récepteur pouvant être monté(e) au dispositif de microphone en tant que module supplémentaire.

6. Procédé pour opérer un dispositif de microphone selon l'une des revendications 1 à 5, ledit procédé comprenant les étapes consistant à :
- surveiller (211) (302) constamment, sur la base d'informations fournies par une unité de capteur (206) comprenant au moins un accéléromètre et un gyroscope, un état de mouvement du dispositif de microphone pour reconnaître l'état de mouvement,
- reconnaître que le dispositif de microphone est à un premier état de mouvement dans lequel le dispositif de microphone est réputé être en vol, ou être lancé et attrapé, sur la base de la détection d'une accélération correspondant à une chute libre, une rotation, une accélération brutale ou décélération brutale se produisant en cas d'une action de lancer ou de rattraper,
- en réponse à la reconnaissance du premier état de mouvement, générer un signal de commande (308) présentant un premier état de signal de commande correspondant au premier état de mouvement,
- en réponse au premier état de signal de commande, régler au moins l'une parmi l'unité de microphone (200) et l'unité de communicateur (202) du dispositif de microphone à un premier état de communication qui est un état de silence, voix inactive,
- reconnaître (212) (303) un état de mouvement changé du dispositif de microphone, ledit état changé du mouvement étant un deuxième état de mouvement dans lequel le dispositif de microphone est réputé être au repos ou être utilisé par un utilisateur, sur la base de la détection d'un mouvement causé par des gestes de main simples ou de variations de mouvement du dispositif causées par l'utilisation normale lorsqu'une personne parle dans le microphone,
- en réponse à la reconnaissance du deuxième état de mouvement, générer (213) un signal de commande (308) présentant un deuxième état de signal de commande correspondant au deuxième état de mouvement,
- en réponse au deuxième état de signal de commande, faire passer (214) au moins l'une parmi l'unité de microphone (200) et l'unité de communicateur (202) du premier état de communication correspondant au premier état de signal de commande à un deuxième état de communication correspondant au deuxième état de signal de commande, ledit deuxième état de communication étant un état non muet (309), voix active,
- former, à partir du signal de microphone, un signal électrique à envoyer à un élément de système externe du système de microphone,
- faire repasser (215) au moins l'une parmi l'unité de microphone (200) et l'unité de communicateur (202) du deuxième état de communication correspondant au deuxième état du signal de commande au premier état de communication correspondant au premier état de signal de commande, en réponse à un autre changement de l'état de mouvement reconnu du dispositif de microphone passant du deuxième état de mouvement au premier état de mouvement.

7. Procédé selon la revendication 6, dans lequel le dispositif de microphone est réglé à un troisième état, un état de mesure, dans lequel le dispositif de microphone est programmé pour effectuer des mesures à partir d'un signal en provenance d'au moins un microphone du dispositif de microphone.

8. Système de microphone (103) comprenant une unité de communication externe (101) pour au moins un dispositif de microphone selon l'une des revendications 1 à 4, ladite unité de communication externe étant configurée pour communiquer avec ledit au moins un dispositif de microphone.
